# EUROPEAN PATENT APPLICATION

(11) **EP 4 592 134 A2**
(43) Date of publication of application: **30.07.2025**
(21) Application number: 25154522.4
(22) Date of filing: 28.01.2025
(51) Int. Cl.: B60L 53/62, B60L 53/66, B60L 53/67, H02J 7/00

(54) **POWER ALLOCATION METHOD AND DEVICE FOR CHARGING SYSTEM, AND CHARGING SYSTEM**

(30) Priority: 29.01.2024 CN 202410125566
(71) Applicant: Sungrow Charging Technology Co., Ltd., Hefei, Anhui 230088 (CN)
(72) Inventor: CHEN, Shaoqin, Hefei, 230088 (CN); ZHAI, Jiwen, Hefei, 230088 (CN); WANG, Gang, Hefei, 230088 (CN)
(74) Representative: Luo, Runhan

(57) **Abstract**

The present disclosure discloses a power allocation method and device for a charging system, and a charging system, belonging to the field of charging control technologies. The charging system includes multiple charging guns and multiple power module groups. The multiple power module groups are configured to supply power to the multiple charging guns. The method includes: acquiring charging demand power of a charging gun among the multiple charging guns; determining, in response to determining that supply power of the charging gun is smaller than the charging demand power, a module group score for each of the multiple power module groups based on a charging gun priority, a charging path priority, an operation state of the power module group, and power information of the power module group; and determining a target module group for the charging gun based on the module group score for each of the multiple power module groups, and controlling the target module group to supply power to the charging gun. According to the method, the power module group can be reasonably invoked for charging based on specific conditions, and balanced service lives of respective power module groups in the system are realized.

## Description

### FIELD

The present disclosure relates to the field of charging control technologies, and more particularly, to a power allocation method and device for a charging system, and a charging system.

### BACKGROUND

With the development of new energy vehicle technologies, real-time power of vehicle charging is continuously increased, to shorten charging time and improve charging efficiency. In order to be compatible with high-power supercharging and conventional fast charging, , multiple power modules are generally grouped and connected in parallel to achieve multi-gun high-power charging, which requires consideration for balancing between maximization of use efficiency of the power modules and the service lives of respective power modules.

At present, power module groups are generally allocated by sequentially searching for an idle power module group in a charging system or simply comparing the use time of the idle power module groups. Therefore, the use efficiency of the power modules cannot be improved for different use conditions on site, and a problem of overuse of individual power module cannot be solved well.

### SUMMARY

The present disclosure aims to solve at least one of the technical problems in the related art. To this end, the present disclosure provides a power allocation method and device for a charging system, and a charging system, which can reasonably invoke power module groups for charging based on specific conditions. In this way, a balanced service life for each power module group in the charging system is achieved, and the use efficiency of the power module groups is improved.

In a first aspect, the present disclosure provides a power allocation method for a charging system. The charging system includes multiple charging guns and multiple power module groups. The multiple power module groups are configured to supply power to the multiple charging guns. The method includes: acquiring charging demand power of a charging gun among the multiple charging guns; determining, in response to determining that supply power of the charging gun is smaller than the charging demand power, a module group score for each of the multiple power module groups based on a charging gun priority, a charging path priority, an operation state of the power module group, and power information of the power module group; and determining a target module group for the charging gun based on the module group score for each of the multiple power module groups, and controlling the target module group to supply power to the charging gun.

According to the power allocation method for the charging system of the present disclosure, when the supply power of the charging gun is smaller than the charging demand power, the module group score for each power module group is calculated by combining information such as the power information and the operation state of the power module group, the charging gun priority, the charging path priority and the like, and the target module group for supplying power to the charging gun is determined based on the module group score. The power module group is no longer invoked according to a simple determination of an idle state of the power module group, but based on a comprehensive determination combining the current charging demand power, a power module group output, and an invocation priority, to maximize the use efficiency of each power module group, while taking into account use frequency of the power module group, such that the service life of each power module is extended, and balanced service lives of respective power module groups are achieved.

According to an embodiment of the present disclosure, the multiple power module groups include a first power module group and a second power module group. The first power module group corresponding to the charging gun is directly connected to the charging gun. The second power module group corresponding to the charging gun is connected to the charging gun through a switching device.

According to an embodiment of the present disclosure, the determining the target module group for the charging gun based on the module group score for each of the multiple power module groups includes determining the target module group for the charging gun based on respective module group scores for the multiple power module groups when the first power module group corresponding to the charging gun supplies power to the charging gun and the supply power of the charging gun is smaller than the charging demand power. The target module group is another first power module group corresponding to the charging gun or the second power module group corresponding to the charging gun.

According to an embodiment of the present disclosure, the determining the target module group for the charging gun based on the module group score for each of the multiple power module groups includes determining the target module group for the charging gun based on respective module group scores for the multiple power module groups when all first power module groups corresponding to the charging gun are occupied and the supply power of the charging gun is smaller than the charging demand power. The target module group is the first power module group corresponding to the charging gun or the second power module group corresponding to the charging gun.

According to an embodiment of the present disclosure, the method further includes, prior to the acquiring the charging demand power of the charging gun: receiving a charging request of the charging gun, where the determining that the supply power of the charging gun is smaller than the charging demand power includes: controlling, in response to determining that a power module group among the multiple power module groups that is directly connected to the charging gun is idle based on the charging request, the power module group directly connected to the charging gun to supply power to the charging gun; acquiring the charging demand power of the charging gun during charging; and determining that the supply power of the charging gun is smaller than the charging demand power; or determining, in response to determining that all power module groups directly connected to the charging gun are occupied based on the charging request, that the supply power of the charging gun is smaller than the charging demand power corresponding to the charging request.

According to an embodiment of the present disclosure, the method further includes, subsequent to the receiving the charging request of the charging gun: sending, in response to determining that the power module group directly connected to the charging gun is idle based on the charging request, a connection request to the power module group directly connected to the charging gun for establishing a connection; and determining that the charging request fails and terminating charging in response to receiving a failure signal returned from the power module group directly connected to the charging gun.

According to an embodiment of the present disclosure, the determining the module group score for each of the multiple power module groups based on the charging gun priority, the charging path priority, the operation state of the power module group, and the power information of the power module group includes obtaining a weighted sum based on the charging gun priority, the charging path priority, the operation state of the power module group, and the power information of the power module group. A weight of the charging gun priority and a weight of the charging path priority are greater than a weight of the power information of the power module group.

According to an embodiment of the present disclosure, the power information of the power module group is equal to an absolute value of a difference between rated power of the power module group and the charging demand power.

In a second aspect, the present disclosure provides a power allocation device of a charging system. The charging system includes multiple charging guns and multiple power module groups. The multiple power module groups are configured to supply power to the multiple charging guns. The device includes: an acquisition module configured to acquire charging demand power of a charging gun among the multiple charging guns; a first processing module configured to determine, in response to determining that supply power of the charging gun is smaller than the charging demand power, a module group score for each of the multiple power module groups based on a charging gun priority, a charging path priority, an operation state of the power module group, and power information of the power module group; a second processing module configured to determine a target module group for the charging gun based on the module group score for each of the multiple power module groups, and control the target module group to supply power to the charging gun.

According to the power allocation device of the charging system of the present disclosure, when the supply power of the charging gun is smaller than the charging demand power, the module group score for each power module group is calculated by combining information such as the power information and the operation state of the power module group, the charging gun priority, the charging path priority and the like, and the target module group for supplying power to the charging gun is determined based on the module group score. The power module group is no longer invoked according to the simple determination of an idle state of the power module group, but based on the comprehensive determination combining the current charging demand power, the power module group output, and the invocation priority, to maximize the use efficiency of each power module group, while taking into account the use frequency of the power module group, such that the service life of each power module is extended, and balanced service lives of respective power module groups are achieved.

In a third aspect, the present disclosure provides a charging system. The charging system includes: multiple charging guns; multiple power module groups, each of the multiple power module groups including multiple power modules, and the multiple charging guns being connected to the multiple power module groups; and the power allocation device as described in the second aspect above. The power allocation device is connected to the multiple charging guns and the multiple power module groups. The power allocation device is configured to allocate electric energy of a power module group among the multiple power module groups to a charging gun among the multiple charging guns.

According to the charging system of the present disclosure, when the supply power of the charging gun is smaller than the charging demand power, the module group score for each power module group is calculated by combining information such as the power information and the operation state of the power module group, the charging gun priority, the charging path priority and the like, and the target module group for supplying power to the charging gun is determined based on the module group score. The power module group is no longer invoked according to the simple determination of an idle state of the power module group, but based on the comprehensive determination combining the current charging demand power, the power module group output, and the invocation priority, to maximize the use efficiency of each power module group, while taking into account the use frequency of the power module group, such that the service life of each power module is extended, and balanced service lives of respective power module groups are achieved.

According to an embodiment of the present disclosure, the power allocation device includes a power allocation routing table, the power allocation routing table includes a correspondence between allocation paths between the multiple charging guns and the multiple power module groups, charging gun priorities, charging path priorities, and switching device information.

In a fourth aspect, the present disclosure provides an electronic device. The electronic device includes a memory, a processor, and a computer program stored in the memory and executable by the processor. The processor, when executing the computer program, implements the power allocation method for the charging system as described in the first aspect above.

In a fifth aspect, the present disclosure provides a non-transitory computer-readable storage medium, which has a computer program stored thereon. The computer program, when executed by a processor, implements the power allocation method for the charging system as described in the first aspect above.

In a sixth aspect, the present disclosure provides a computer program product including a computer program. The computer program, when executed by a processor, implements the power allocation method for the charging system as described in the first aspect above.

Additional aspects and advantages of the present disclosure will be given at least in part in the following description, become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings. In the drawings,
FIG. 1 is a first schematic flowchart of a power allocation method for a charging system according to an embodiment of the present disclosure;
FIG. 2 is a second schematic flowchart of a power allocation method for a charging system according to an embodiment of the present disclosure;
FIG. 3 is a schematic structural diagram of a power allocation device of a charging system according to an embodiment of the present disclosure;
FIG. 4 is a first schematic diagram showing a power allocation topology of a charging system according to an embodiment of the present disclosure;
FIG. 5 is a second schematic diagram showing a power allocation topology of a charging system according to an embodiment of the present disclosure; and
FIG. 6 is a schematic structural diagram of an electronic device according to an embodiment of the present disclosure.

Reference numerals in the accompanying drawings:
charging system 400; power module group 410; charging gun 420.

### DETAILED DESCRIPTION

Technical solutions in embodiments of the present disclosure will be described clearly below in combination with accompanying drawings of the embodiments of the present disclosure. Obviously, the embodiments described below are only a part of the embodiments of the present disclosure, rather than all of the embodiments of the present disclosure. On a basis of the embodiments of the present disclosure, all other embodiments acquired by those skilled in the art shall fall within the protection scope of the present disclosure.

Terms such as "first", "second", and the like in detailed descriptions of the embodiments and the claims of the present disclosure are used only to distinguish between similar objects, rather than implying a particular sequence or order of the objects. It should be understood that the terms may be interchanged where appropriate, to enable the embodiments of the present disclosure described herein to be implemented in an order other than that illustrated or described herein. Objects distinguished by "first," "second," etc. are generally of a same type and do not limit the number of objects. For example, there may be one or more first objects. In addition, "and/or" in the description and claims indicates at least one of the connected objects. The character "/" generally indicates that the associated objects before and after the character are in an "or" relationship.

A power allocation method for a charging system 400, a power allocation device for a charging system 400, a charging system 400, an electronic device, and a readable storage medium according to the embodiment of the present disclosure are described in detail below with reference to the accompanying drawings through specific embodiments and application scenarios thereof.

The power allocation method for the charging system 400 is applicable to a terminal, and more particularly, is executable by hardware or software in the terminal.

The terminal includes, but is not limited to, a portable communication device such as a mobile phone or a tablet computer having a touch-sensitive surface (e.g., a touch screen display and/or a touchpad). It should also be appreciated that in some embodiments, the terminal may not be a portable communication device, but rather a desktop computer having a touch-sensitive surface (e.g., a touch screen display and/or a touchpad).

In various embodiments below, a terminal including a display and a touch-sensitive surface is described. However, it should be understood that the terminal may include one or more other physical user interface devices, such as a physical keyboard, a mouse, and a joystick.

In the power allocation method for the charging system 400 according to the embodiments of the present disclosure, an execution subject of the power allocation method for the charging system 400 may be an electronic device or a functional module or functional entity in the electronic device capable of implementing the power allocation method for the charging system 400. The electronic device mentioned in the embodiments of the present disclosure includes, but is not limited to, a mobile phone, a tablet computer, a computer, a camera, a wearable device, etc. The power allocation method for the charging system 400 according to the embodiments of the present disclosure will be described below by taking the electronic device as the execution subject.

The charging system 400 according to an embodiment of the present disclosure includes multiple charging guns 420 and multiple power module groups 410. The multiple power module groups 410 are configured to supply power to the multiple charging guns 420.

The charging system 400 is a system for providing electric energy to an electricity-consumption device such as an electric vehicle.

In this embodiment, the charging gun 420 is configured to connect the electricity-consumption device to the charging system 400. The charging gun 420 may be inserted into a charging port of the electricity-consumption device. Electric energy in the charging system 400 is transmitted to the electricity-consumption device through the charging gun 420.

In this embodiment, the power module group 410 may include multiple power modules. The power module group 410 is a device capable of providing electric energy in the charging system 400. The power module group 410 provides electric energy to the charging gun 420, and the charging gun 420 then transmits the electric energy to the electricity-consumption device.

It should be understood that multiple power module groups 410 may supply power to one charging gun 420 in parallel, and the multiple power modules of one power module group 410 may alternatively supply power to different charging guns 420, respectively.

In this embodiment, the charging gun 420 may be directly connected to the power module group 410. A switching device such as a contactor may alternatively be disposed between the charging gun 420 and the power module group 410, which are connected with each other by turning on the switching device. When the charging gun 420 is connected to the power module group 410, the power module group 410 may supply power to the charging gun 420.

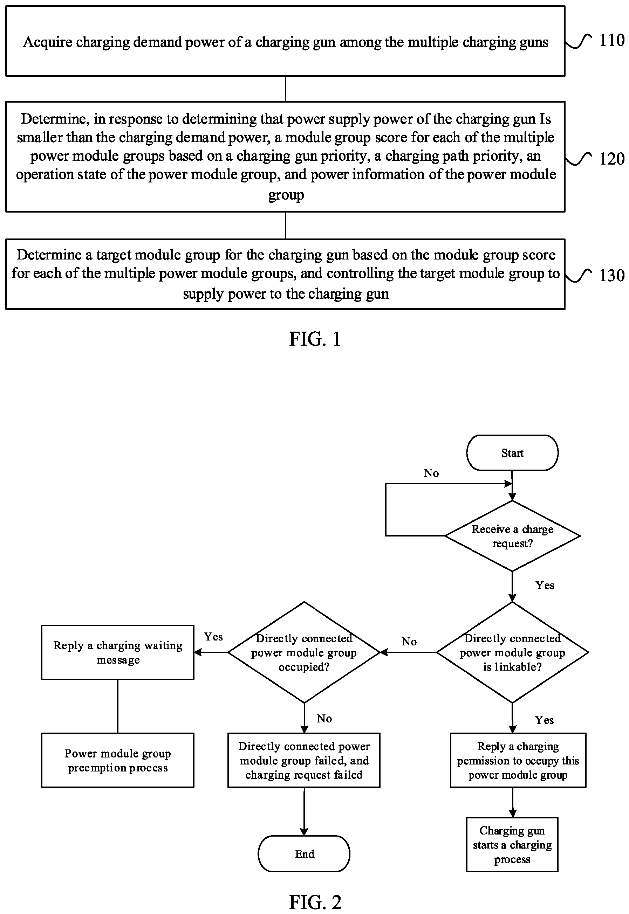

As shown in FIG. 1, the power allocation method for the charging system 400 includes operations at blocks 110, 120, and 130.

At block 110, charging demand power of a charging gun 420 among the multiple charging guns 420 is acquired.

The charging demand power may be current real-time power required by an electricity-consumption device corresponding to the charging gun 420.

At block 120, in response to determining that supply power of the charging gun 420 is smaller than the charging demand power, a module group score for each of the multiple power module groups 410 is determined based on a charging gun priority, a charging path priority, an operation state of the power module group 410, and power information of the power module group 410.

The supply power is power of electric energy currently provided by the charging gun 420 to the electricity-consumption device.

In this step, the supply power of the charging gun 420 being smaller than the charging demand power indicates that the charging gun 420 cannot meet the current charging demand of the electricity-consumption device.

It should be understood that when the current charging gun 420 is supplied by one or more power module groups 410, in response to determining that the supply power of the charging gun 420 is smaller than the charging demand power, another power module group 410 may be invoked to replace the current power module group 410 to supply power to the charging gun 420, or another power module group 410 may be provided in addition to the current power module group 410 to supply power to the charging gun 420 together with the current power module group 410.

In this embodiment, the module group score is calculated based on the charging gun priority, the charging path priority, the operation state of the power module group 410, and the power information of the power module group 410. The power module group 410 is invoked or added for the charging gun 420 based on the module group score.

The operation state and the power information of the power module group 410 may represent an occupation state, an operation duration, operation power, and the like of the power module group 410.

The charging gun priorities represents a priority of a charging gun among multiple charging guns 420 occupying the same power module group 410 when the multiple charging guns 420 request to occupy the power module group 410. The charging path priority represents a priority of a power module group among multiple power module groups 410 occupied by the charging gun 420 when the multiple power module groups 410 are capable of supplying power to the charging gun 420.

In this embodiment, the operation state of the power module group 410 may include whether the power module group 410 is occupied and the operation duration of the power module group 410.

Whether the power module group 410 is occupied may be represented by values of 1 and 0, where 1 may indicate that the power module group 410 is not occupied or occupied by the charging gun 420 corresponding to the module group score currently calculated for the power module group 410, and 0 may indicate that the power module group 410 is occupied by another charging gun 420.

The operation duration of the power module group 410 may be the operation duration of the power module group 410 from time when the power module group 410 is put into service after production to the current time. The operation duration of the power module group 410 is stored at power off. The operation duration of the power module group 410 may be measured in seconds, and may have an initial value of 1.

In this embodiment, the power information of the power module group 410 may represent a difference between rated power of the power module group 410 and the charging demand power.

In this embodiment, the charging path priority may be defined within a numerical value range, and charging path priorities of different numerical values may be set for different power module groups 410 corresponding to the same charging gun 420.

The charging gun priority may be defined within a numerical value range, and charging gun priorities of different numerical values are assigned to different charging guns 420 corresponding to the same power module group 410.

For example, the charging gun priority and the charging path priority may be integers ranging from 0 to 15.

In this embodiment, calculation may be performed based on the charging gun priority, the charging path priority, the operation state of the power module group 410, and the power information of the power module group 410. For example, the charging gun priority, the charging path priority, the operation state of the power module group 410, and the power information of the power module group 410 are added together, and a result of the calculation is the module group score.

At block 130, a target module group for the charging gun 420 is determined based on the module group score for each of the multiple power module groups 410, and the target module group 410 is controlled to supply power to the charging gun 420.

The target module group is one of the multiple power module groups 410 that is determined based on the module group score for supplying power to the charging gun 420.

In actual application, the power module group 410 with a highest module group score may be determined as the target module group, or an idle power module group 410 among power module groups 410 having top three module group scores may be determined as the target module group.

For example, four power module groups 410, including a power module group 410a, a power module group 410b, a power module group 410c, and a power module group 410d, are provided. The module group score for the power module group 410a is 10, the module group score for the power module group 410b is 5, the module group score for the power module group 410c is 8, and the module group score for the power module group 410d is 9. The power module group 410a is determined as the target module group.

In the related art, power module groups are generally allocated by sequentially searching for an idle module group in the system or simply comparing the use time of the idle module groups. Therefore, the use efficiency of the power modules cannot be improved for different use conditions on site, and a problem of overuse of individual power module cannot be solved well.

In the embodiment of the present disclosure, in response to determining that the current supply power of the charging gun 420 fails to meet the charging demand power of the electricity-consumption device, the module group score for each power module group 410 is calculated based on information such as the power information and the operation state of the power module group 410, the charging gun priority, the charging path priority, and the like. The target module group for supplying power to the charging gun 420 is determined based on the module group score.

In this embodiment, the module group score is determined by combining the power information, the operation state, and the like of the power module group 410, to maximize the use efficiency of the power module group 410, while taking the use frequency of the power module group 410 into consideration, such that the service life of the power module group 410 can be prolonged.

In addition, the charging path priority is be configured, so as to perform prioritized invocation of a power module group 410, reducing invocation of an abnormal power module group 410. The charging gun priority is configured so as to perform prioritized occupation of the corresponding power module group 410 by a charging gun 420, thereby increasing a power output capability of the charging gun 420 when power module groups 410 are all busy.

The target module group for supplying power to the charging gun 420 is determined based on the module group score, such that the power module group 410 can be suitably invoked for charging based on specific conditions, which achieves balanced service lives of respective power module groups 410 in the system. With the power allocation method for the charging system 400 of the present disclosure, when the supply power of the charging gun 420 is smaller than the charging demand power, the module group score for each power module group 410 is calculated by combining information such as the power information and the operation state of the power module group 410, the charging gun priority, the charging path priority and the like, and the target module group for supplying power to the charging gun 420 is determined based on the module group score. The power module group 410 is no longer invoked according to a simple determination of an idle state of the power module group 410, but based on a comprehensive determination combining the current charging demand power, an output of the power module group 410, and an invocation priority, to maximize the use efficiency of each power module group 410, while taking into account the use frequency of the power module group 410, such that the service life of each power module is extended, and balanced service lives of respective power module groups 410 are achieved.

In some embodiments, the multiple power module groups 410 include a first power module group and a second power module group.

The first power module group corresponding to the charging gun 420 is directly connected to the charging gun 420. The second power module group corresponding to the charging gun 420 is connected to the charging gun 420 through a switching device.

In this embodiment, the first power module group corresponding to one charging gun 420 may be the first power module group or the second power module group corresponding to another charging gun 420. The second power module group corresponding to one charging gun 420 may be the first power module group or the second power module group corresponding to another charging gun 420.

In this embodiment, the first power module group corresponding to the charging gun 420 may directly supply power to the charging gun 420. The second power module group corresponding to the charging gun 420 may supply power to the charging gun 420 when a switching device for connecting the second power module group with the charging gun 420 is closed.

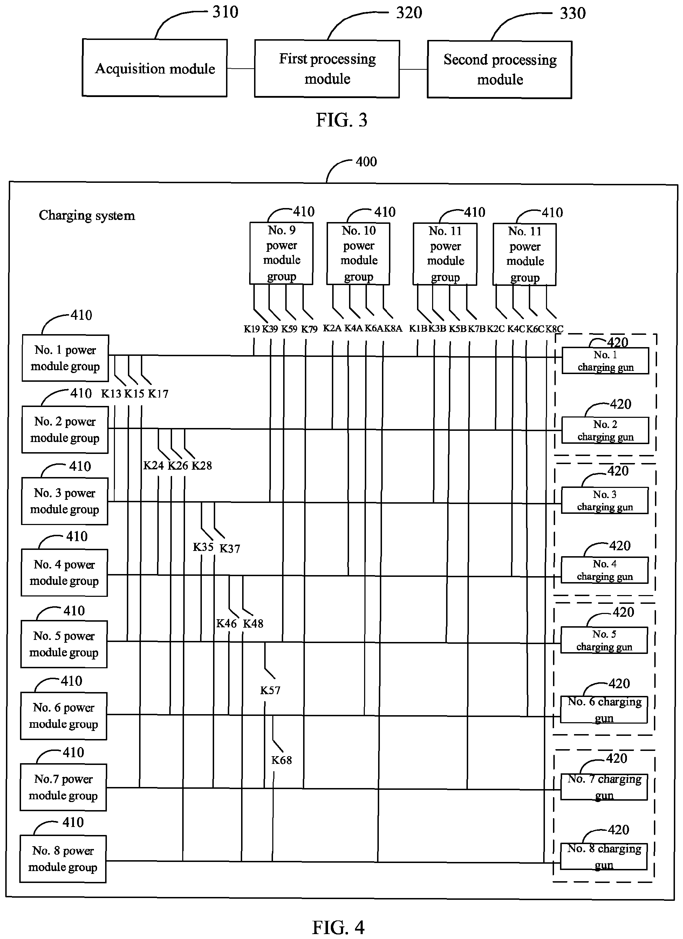

For example, as shown in FIG. 4, for the No. 1 charging gun 420, the No. 1 power module group 410 is the first power module group and may directly supply power to the No. 1 charging gun 420; and each of the No. 3 power module group 410, the No. 5 power module group 410, the No. 7 power module group 410, the No. 9 power module group 410, and the No. 11 power module group 410 is the second power module group, and may supply power to the No. 1 charging gun 420 when the corresponding switching device is closed.

In some embodiments, the determining the target module group for the charging gun 420 based on the module group score for each of the multiple power module groups 410 includes: determining the target module group for the charging gun 420 based on respective module group scores for the multiple power module groups 410 when the first power module group corresponding to the charging gun 420 supplies power to the charging gun 420 and the supply power of the charging gun 420 is smaller than the charging demand power. The target module group is another first power module group corresponding to the charging gun 420 or the second power module group corresponding to the charging gun 420.

In this embodiment, the supply power of the charging gun 420 may be acquired in real-time when the first power module group corresponding to the charging gun 420 supplies power to the charging gun 420.

In this embodiment, the another first power module group corresponding to the charging gun 420 is the first power module group other than the first power module group currently charging the charging gun 420.

In this embodiment, when the another first power module group corresponding to the charging gun 420 or the second power module group corresponding to the charging gun 420 is determined as the target module group, the target module group may replace the first power module group currently supplying power to the charging gun 420 to supply power to the charging gun 420 when the target module group is capable of meeting the power supply demand of the charging gun 420 alone, and the charging gun 420 may be supplied with power by the target module group together with the first power module group that currently supplies power to the charging gun 420 when the target module group cannot meet the power supply demand of the charging gun 420 alone.

In some embodiments, the determining the target module group for the charging gun 420 based on the module group score for each of the multiple power module groups 410 includes: determining the target module group for the charging gun 420 based on respective module group scores for the multiple power module groups 410 when all first power module groups corresponding to the charging gun 420 are occupied and the supply power of the charging gun 420 is smaller than the charging demand power. The target module group is the first power module group corresponding to the charging gun 420 or the second power module group corresponding to the charging gun 420.

The first power module being occupied is a state in which the first power module group supplies power to another charging gun 420.

In this embodiment, all first power module groups corresponding to the charging gun 420 being occupied and the supply power of the charging gun 420 being smaller than the charging demand power may be a state in which no power module group 410 supplies power to the charging gun 420, i.e., the supply power of the charging gun 420 is equal to 0.

In this embodiment, when the second power module group corresponding to the charging gun 420 is idle, the second power module group may be determined as the target module group based on the module group score, or the first power module group supplying power to another charging gun 420 may be preempted based on the module group score and the charging gun priority.

In some embodiments, the method further includes, prior to the acquiring the charging demand power of the charging gun 420: receiving a charging request of the charging gun 420; and the determining that the supply power of the charging gun 420 is smaller than the charging demand power includes: controlling, in response to determining that a power module group 410 among the multiple power module groups 410 that is directly connected to the charging gun 420 is idle based on the charging request, the power module group 410 directly connected to the charging gun 420 to supply power to the charging gun 420; acquiring the charging demand power of the charging gun 420 during charging; and determining that the supply power of the charging gun 420 is smaller than the charging demand power.

The charging request is outputted by the charging gun 420 for requesting the charging system 400 to allocate the power module group 410 to the charging gun 420 and to supply power to the charging gun 420 through the allocated power module group 410.

In this embodiment, the charging request may include a serial number of the charging gun 420 corresponding to the charging request and the charging demand power of the charging gun 420.

In this embodiment, based on the charging request, the serial number of the charging gun 420 corresponding to the charging request may be determined to determine the power module group 410 directly connected to the charging gun 420, and determine whether the power module group 410 directly connected to the charging gun 420 is idle.

It should be understood that no switching device exists in the loop for connecting the power module group 410 directly connected to the charging gun 420 with the charging gun 420. For example, as shown in FIG. 4, the No. 1 power module group 410 is directly connected to the No. 1 charging gun 420.

It should be noted that, the power module group 410 directly connected to the charging gun 420 being idle means that not all the power module groups 410 directly connected to the charging gun 420 are occupied.

In this embodiment, the module group score for each power module group 410 that is directly connected to the charging gun 420 and that is idle may be calculated. The target module group is determined based on the module group score to supply power to the charging gun 420, and the charging demand power of the charging gun 420 is acquired in real-time during charging.

In other embodiments, the method further includes, prior to the acquiring the charging demand power of the charging gun 420: receiving a charging request of the charging gun 420; and the determining that the supply power of the charging gun 420 is smaller than the charging demand power includes: determining, in response to determining that all power module groups 410 directly connected to the charging gun 420 are occupied based on the charging request, that the supply power of the charging gun 420 is smaller than the charging demand power corresponding to the charging request.

In this embodiment, all power module groups 410 directly connected to the charging gun 420 being occupied is a state in which all power module groups 410 directly connected to the charging gun 420 supply power to other charging guns 420.

It should be understood that when all power module groups 410 directly connected to the charging gun 420 are occupied, the supply power of the charging gun 420 is 0, and the supply power is smaller than the charging demand power corresponding to the charging request.

In some embodiments, the method further includes, subsequent to the receiving the charging request of the charging gun 40: sending, in response to determining that the power module group 410 directly connected to the charging gun 420 is idle based on the charging request, a connection request to the power module group 410 directly connected to the charging gun 420 for establishing a connection; and determining that the charging request fails and terminating charging in response to receiving a failure signal returned from the power module group 410 directly connected to the charging gun 420.

In this embodiment, subsequent to establishment of the connection between the charging gun 420 and the power module group 410 directly connected to the charging gun 420, the power module group 410 directly connected to the charging gun 420 may supply power to the charging gun 420.

In this embodiment, the charging gun 420 may send the connection request to the power module group 410 directly connected to the charging gun 420. In response to receiving the connection request, the power module group 410 directly connected to the charging gun 420 may attempt to establish a connection with the corresponding charging gun 420. When the establishment of the connection fails, it may be determined that the power module group 410 is faulty, and the power module group 410 returns a fault signal to the charging gun 420.

It should be noted that, receiving the fault signal returned from the power module group 410 directly connected to the charging gun 420 means that all power module groups 410 directly connected to the charging gun 420 return fault signals, and when a power module group 410 among the power module groups 410 directly connected to the charging gun 420 operates normally, the power module group 410 operating normally may be determined as the target module group to supply power to the charging gun 420.

In this embodiment, charging failure information may be returned when the charging request failing is determined and charging is terminated, and the charging gun 420 may be replaced for the electricity-consumption device in response to receiving the charging failure information.

In some embodiments, the determining the module group score for each of the multiple power module groups 410 based on the charging gun priority, the charging path priority, the operation state of the power module group 410, and the power information of the power module group 410 includes: obtaining a weighted sum based on the charging gun priority, the charging path priority, the operation state of the power module group 410, and the power information of the power module group 410. A weight of the charging gun priority and a weight of the charging path priority are greater than a weight of the power information of the power module group.

In this embodiment, different weights may be assigned to the charging gun priority, the charging path priority, the operation state of the power module group 410, and the power information of the power module group 410, and the weighted sum may be obtained.

For example, I denotes whether the power module group 410 is occupied in the operation state of the power module group 410, and the corresponding weight is *K*1; *T* denotes the operation duration of the power module group 410 in the operation state of the power module group 410, and the corresponding weight is *K*2; *Pg* denotes the charging gun priority, and the corresponding weight is *K*3; *Pr* denotes the charging path priority, and the corresponding weight is *K*4; and *Wd-r* denotes the power information of the power module group 410, and the corresponding weight is 1/*K*5. The module group score may be obtained through the following equation: *Y* = *K*1×*I* + *K*2 / *T* + *K*3×*Pg* + *K*4×Pr - *Wd-r* / *K*5*.*

In this embodiment, the weight of each parameter may be adjusted based on specific situations.

In this embodiment, the weight of the charging gun priority and the weight of the charging path priority are greater than the weight of the power information of the power module group 410. Therefore, even if the charging gun 420 with a higher charging gun priority has the latest startup, the charging gun 420 can preempt the power module group 410 when the power module group 410 is occupied.

In some embodiments, the power information of the power module group 410 is equal to an absolute value of a difference between rated power of the power module group 410 and the charging demand power.

In this embodiment, to balance between the service life and the output efficiency of the power module group 410, the power module group 410 may be operated at an optimum output efficiency point, which is generally between 40% and 70% of the rated power. The absolute value of a difference between the optimum output efficiency point of the power module group 410 and the charging demand power may be calculated as the power information of the power module group 410.

For example, assuming that *Wr* is the rated power of the power module group 410, *Wd* is the charging demand power, *Wr*×*E* is the optimum output efficiency point of the power module group 410, and *E* is 0.7, the power information of the power module group 410 is |*Wd* - *Wr*×*E*|*.*

In this embodiment, the power information of the power module group 410 is equal to the absolute value of the difference between the rated power of the power module group 410 and the charging demand power. The closer the rated power of the power module group 410 is to the charging demand power, the smaller the power information of the power module group 410 is. Under the same circumstances, the smaller the power information of the power module group 410 is, the higher the module group score is, allowing on-demand allocation.

An embodiment of the power allocation method for the charging system 400 is given below.

In this embodiment, each charging gun 420 corresponds to one power module group 410 directly connected to the charging gun 420.

As shown in FIG. 2, at step 1, it is determined whether a charging request is received, i.e., whether a charging request from the charging gun 420 is received.

At step 2, it is determined, in response to receiving the charging request from the charging gun 420, whether the power module group 410 directly connected to the charging gun 420 is linkable, and when the power module group 410 linkable, a charging permission is returned, the charging gun 420 occupies the power module group 410, and the charging gun 420 starts a charging process.

At step 3, it is determined whether the power module group 410 directly connected to the charging gun 420 is occupied when the power module group 410 directly connected to the charging gun 420 is not linkable. When the power module group 410 is not occupied, the power module group 410 directly connected to the charging gun 420 is faulty. The charging request fails, and the charging is terminated.

At step 4, when the power module group 410 directly connected to the charging gun 420 is occupied, a charging waiting message is returned, and a process of preempting the power module group 410 is started. That is, the module group score for each power module group 410 is determined based on the charging gun priority, the charging path priority, the operation state of the power module group 410, and the power information of the power module group 410. Based on the module group score for each power module group 410, the target module group for the charging gun 420 is determined, and the target module group is controlled to supply power to the charging gun 420.

The execution subject of the power allocation method for the charging system 400 according to the embodiments of the present disclosure may be a power allocation device of the charging system 400. In an embodiment of the present disclosure, the power allocation device of the charging system 400 executing the power allocation method for the charging system 400 is described as an example, to illustrate the power allocation device of the charging system 400 according to the embodiments of the present disclosure.

The embodiments of the present disclosure further provide a power allocation device of the charging system 400.

In the embodiments of the present disclosure, the charging system 400 includes multiple charging guns 420 and multiple power module groups 410. The multiple power module groups 410 are configured to supply power to the multiple charging guns 420.

As shown in FIG. 3, the power allocation device of the charging system 400 includes an acquisition module 310, a first processing module 320, and a second processing module 330.

The acquisition module 310 is configured to acquire charging demand power of a charging gun 420 among the multiple charging guns 420.

The first processing module 320 is configured to determine, in response to determining that supply power of the charging gun 420 is smaller than the charging demand power, a module group score for each of the multiple power module groups 410 based on a charging gun priority, a charging path priority, an operation state of the power module group 410, and power information of the power module group 410.

The second processing module 330 is configured to determine a target module group for the charging gun 420 based on the module group score for each of the multiple power module groups 410, and control the target module group to supply power to the charging gun 420.

According to the power allocation device for the charging system 400 of the embodiments of the present disclosure, when the supply power of the charging gun 420 is smaller than the charging demand power, the module group score for each power module group 410 is calculated by combining information such as the power information and the operation state of the power module group 410, the charging gun priority, the charging path priority and the like, and the target module group for supplying power to the charging gun 420 is determined based on the module group score. The power module group 410 is no longer invoked according to the simple determination of the idle state of the power module group 410, but based on the comprehensive determination combining the current charging demand power, the output of the power module group 410, and the invocation priority, to maximize the use efficiency of each power module group 410, while taking into account the use frequency of the power module group 410, such that the service life of each power module is extended, and balanced service lives of respective power module groups 410 are achieved.

In some embodiments, the multiple power module group 410 includes a first power module group and a second power module group. The first power module group corresponding to the charging gun 420 is directly connected to the charging gun 420. The second power module group corresponding to the charging gun 420 is connected to the charging gun 420 through a switching device.

In some embodiments, the second processing module 330 is configured to determine the target module group for the charging gun 420 based on respective module group scores for the multiple power module groups 410 when the first power module group corresponding to the charging gun 420 supplies power to the charging gun 420 and the supply power of the charging gun 420 is smaller than the charging demand power. The target module group is another first power module group corresponding to the charging gun 420 or the second power module group corresponding to the charging gun 420.

In some embodiments, the second processing module 330 is configured to determine the target module group of the charging gun 420 based on respective module group scores for the multiple power module groups 410 when all first power module groups corresponding to the charging gun 420 are occupied and the supply power of the charging gun 420 is smaller than the charging demand power. The target module group is the first power module group corresponding to the charging gun 420 or the second power module group corresponding to the charging gun 420.

In some embodiments, the acquisition module 310 is configured to receive a charging request of the charging gun 420.

The first processing module 320 is configured to control, in response to determining that a power module group 410 among the multiple power module groups 410 that is directly connected to the charging gun 420 is idle based on the charging request, the power module group 410 directly connected to the charging gun 420 to supply power to the charging gun 420; acquire the charging demand power of the charging gun 420 during charging; and determine that the supply power of the charging gun 420 is smaller than the charging demand power; or determine, in response to determining that all power module groups 410 directly connected to the charging gun 420 are occupied based on the charging request, that the supply power of the charging gun 420 is smaller than the charging demand power corresponding to the charging request.

In some embodiments, the first processing module 320 is configured to send, in response to determining that the power module group 410 directly connected to the charging gun 420 is idle based on the charging request, a connection request to the power module group 410 directly connected to the charging gun 420 for establishing a connection; and determine that the charging request fails and terminate charging in response to receiving a failure signal returned from the power module group 410 directly connected to the charging gun 420.

In some embodiments, the first processing module 320 is configured to obtain a weighted sum based on the charging gun priority, the charging path priority, the operation state of the power module group 410, and the power information of the power module group 410. A weight of the charging gun priority and a weight of the charging path priority are greater than a weight of the power information of the power module group 410.

In some embodiments, the power information of the power module group 410 is equal to an absolute value of a difference between rated power of the power module group 410 and the charging demand power.

The power allocation device of the charging system 400 in the embodiments of the present disclosure may be an electronic device, or a component of the electronic device, such as an integrated circuit or a chip. The electronic device may be a terminal or other device other than the terminal. Illustratively, the electronic device may be a mobile phone, a tablet computer, a laptop computer, a handheld computer, an in-vehicle electronic device, a Mobile Internet Device (MID), an augmented reality (AR)/virtual reality (VR) device, a robot, a wearable device, an ultra-mobile personal computer (UMPC), a Netbook, or a personal digital assistant (PDA). The electronic device may also be a server, a Network Attached Storage (NAS), a personal computer (PC), a television (TV), a teller machine, a kiosk, etc., and the embodiments of the present disclosure are not specifically limited in this regard.

The power allocation device of the charging system 400 in the embodiments of the present disclosure may be a device having an operating system. The operating system may be an Android operating system, an IOS operating system, or other possible operating systems, which are not specifically limited in the embodiments of the present disclosure.

The power allocation device for the charging system 400 according to the embodiments of the present disclosure can implement processes implemented by the method embodiments shown in FIG. 1 and FIG. 2, which is not described here to avoid repetition.

The embodiments of the present disclosure further provide the charging system 400.

The charging system 400 includes multiple charging guns 420, multiple power module groups 410, and the above power allocation device. Each of the multiple power module group 410 includes multiple power modules. The multiple charging guns 420 are connected to the multiple power module groups 410.

The power allocation device of the charging system 400 is connected to the multiple charging guns 420 and the multiple power module groups 410, and the power allocation device is configured to allocate electric energy of a power module group 410 among the multiple power module groups 410 to a charging gun 420 among the multiple charging guns 420.

In this embodiment, the power allocation device may be connected to each charging gun 420 to acquire information such as a charging request and charging demand power of each charging gun 420. The power allocation device may be connected to each power module group 410 to acquire an operation state and power information of each power module group 410, and may control an on-off state of a switching device in a charging path where the power module group 410 is located. The power allocation device may control the power module group 410 to supply power to the charging gun 420.

According to the charging system 400 of the embodiments of the present disclosure, when the supply power of the charging gun 420 is smaller than the charging demand power, the module group score for each power module group 410 is calculated by combining information such as the power information and the operation state of the power module group 410, the charging gun priority, the charging path priority and the like, and the target module group for supplying power to the charging gun 420 is determined based on the module group score. The power module group 410 is no longer invoked according to the simple determination of the idle state of the power module group 410, but based on the comprehensive determination combining the current charging demand power, the output of the power module group 410, and the invocation priority, to maximize the use efficiency of each power module group 410, while taking into account the use frequency of the power module group 410, such that the service life of each power module is extended, and balanced service lives of respective power module groups 410 are achieved.

In some embodiments, the power allocation device includes a power allocation routing table. The power allocation routing table includes a correspondence between allocation paths between the multiple charging guns 420 and the multiple power module groups 410, charging gun priorities, charging path priorities, and switching device information.

The switching device information includes a quantity of switching devices and serial numbers of switching devices.

For example, Table 1 is a routing table corresponding to the charging system 400 of FIG. 4. In Table 1, the power allocation path number is a serial number of an allocation path between the charging gun 420 and the power module group 410. The gun number is a serial number of the charging gun 420. The module group number is a serial number of the power module group 410. The path priority is the charging path priority, and the quantity of contactors in this path is the quantity of switching devices in the allocation path between the charging gun 420 and the power module group 410. 1# contactor is the serial number of the switching device.

**Table 1**

| Power allocation path number | Gun number | Module group number | Charging gun priority | Charging path priority | Quantity of contactors in this path | 1# contactor |
|---|---|---|---|---|---|---|
| 1 | 1 | 3 | 1 | 2 | 1 | K13 |
| 2 | 1 | 5 | 1 | 2 | 1 | K15 |
| 3 | 1 | 7 | 1 | 2 | 1 | K17 |
| 4 | 1 | 9 | 2 | 3 | 1 | K19 |
| 5 | 1 | 11 | 1 | 1 | 1 | K18 |
| 6 | 2 | 4 | 1 | 2 | 1 | K24 |
| 7 | 2 | 6 | 1 | 2 | 1 | K26 |
| 8 | 2 | 8 | 1 | 2 | 1 | K28 |
| 9 | 2 | 10 | 1 | 1 | 1 | K2A |
| 10 | 2 | 12 | 1 | 1 | 1 | K2C |
| 11 | 3 | 1 | 1 | 2 | 1 | K13 |
| 12 | 3 | 5 | 1 | 2 | 1 | K35 |
| 13 | 3 | 7 | 1 | 2 | 1 | K37 |
| 14 | 3 | 9 | 1 | 1 | 1 | K39 |
| 15 | 3 | 11 | 1 | 1 | 1 | K3B |
| ...... | ...... | ...... | | | | |
| 40 | 8 | ...... | | | | |

In this embodiment, the weighted sum is obtained based on the charging gun priority, the charging path priority, the operation state of the power module group 410, and the power information of the power module group 410 to acquire the module group score. The weight of the charging gun priority and the weight of the charging path priority may be greater than the weight of the power information of the power module group 410, such that the target module group is determined mainly based on the charging gun priority and the charging path priority.

In this embodiment, when the multiple charging guns 420 simultaneously contend for a use permission of the same power module group 410 under the same condition, the power module group 410 may be preempted by the charging gun 420 with a higher charging gun priority corresponding to the power module group 410.

For example, as shown in Table 1, for the No. 9 power module group 410, the charging gun priority of the No. 1 charging gun 420 is 2, and the charging gun priority of the No. 3 charging gun 420 is 1. Under the same conditions, when the No. 1 charging gun 420 and the No. 3 charging gun 420 simultaneously request to occupy the No. 9 power module group 410, the No. 9 power module group 410 is successfully preempted by the No. 1 charging gun 420.

It should be noted that, when the power module group 410 is occupied by a certain charging gun 420, and another charging gun 420 with a higher charging gun priority value requests to occupy the power module group 410, the power module group 410 will be preempted and occupied by the charging gun 420 with the higher charging gun priority.

For example, as shown in Table 1, for the No. 9 power module group 410, the charging gun priority of the No. 1 charging gun 420 is 2, and the charging gun priority of the No. 3 charging gun 420 is 1. The No. 9 power module group 410 is occupied by the No. 3 charging gun 420. In this case, the No. 1 charging gun 420 requests to occupy the No. 9 power module group 410, and the No. 9 power module group 410 will be preempted and occupied by the No. 1 charging gun 420.

In practice, the charging gun 420 performing urgent or important charging tasks may be assigned a higher charging gun priority, to meet the charging demand of the corresponding electricity-consumption device.

In this embodiment, under the same conditions, when multiple power module groups 410 are capable of supplying power to the same charging gun 420, the power module group 410 with a higher charging path priority is more easily invoked by the charging gun 420 to charge the charging gun 420.

For example, in Table 1, when a maximum value of the charging path priority of the No. 9 power module group 410 invoked by the No. 1 charging gun 420 is 3, under the same conditions, it is more probable that the No. 9 power module group 410 will be invoked preferentially by the No. 1 charging gun 420.

In practice, the charging path priority of the power module group 410 in which some of the internal power modules operate abnormally may be lowered, to reduce the invocation of the abnormal power module group 410 by the charging gun 420 as much as possible, and avoid expansion of the abnormal problem of the power module group 410.

In the embodiments of the present disclosure, the charging system 400 charges the electricity-consumption device, and the electricity-consumption device may be a common electricity-consumption device or a high-power electricity-consumption device.

A specific embodiment of the charging system 400 charging the common electricity-consumption device is described below.

In this embodiment, each charging gun 420 corresponds to one power module group 410 directly connected to the charging gun 420.

FIG. 4 shows the power allocation topology of a 480 KW charging system 400 connected to four common electricity-consumption devices.

In this embodiment, the No. 1 to No. 8 power module groups may be directly connected to respective charging guns 420. Rated power of a single power module in the power module group 410 is 30 KW. Quantities of power modules included in the No. 1 to No. 8 power module groups is 1, 2, 2, 1, 1, 2, 2, 1, respectively. One power module in each of the No. 9 to No. 12 power module groups serves as a free module. A routing table corresponding to the 480KW charging system 400 is shown in Table 1, which lists the allocation paths between the No. 1 to No. 3 charging guns 420 and the power module groups 410.

In this embodiment, when the No. 1 charging gun 420 starts charging, the No. 1 charging gun 420 sends the charging request to the power allocation device of the charging system 400, and when the No. 1 power module group 410 directly connected to the charging gun 420 is idle, the charging system 400 returns a charging permission, and the No. 1 charging gun 420 occupies the No. 1 power module group 410.

In this embodiment, subsequent to the No. 1 charging gun 420 occupies the No. 1 power module group 410, and starts charging, and when the charging demand power of the No. 1 charging gun 420 increases and the power provided by the No. 1 power module group 410 currently occupied by the No. 1 charging gun 420 is smaller than the charging demand power, the power allocation device of the charging system 400 determines the target module group for the charging gun 420 by obtaining the weighted sum based on the charging gun priority, the charging path priority, the operation state of the power module group 410 and the power information of the power module group 410.

In this embodiment, as shown in the routing table in Table 1, the charging path priority of the No. 4 path in which the No. 1 charging gun 420 invokes the No. 9 power module group 410 is 3. Therefore, with other conditions being same, it is more probable that the No. 9 power module group 410 is preferentially invoked by the No. 1 charging gun 420.

In this embodiment, when eight charging guns 420 perform charging at the same time and the charging demand power of the eight charging guns 420 exceeds 60 KW, in order to ensure that each charging gun 420 can guarantee at least 60KW output, in the No. 4 path, the charging path priority of the No. 1 charging gun 420 invoking the No. 9 power module group 410 is 3, which is higher than that of the other power module groups 410, and the charging gun priority of the No. 1 charging gun 420 is 2. In the No. 14 path, the charging path priority and the charging gun priority corresponding to the No. 3 charging gun 420, which also has the permission for invoking the No. 9 power module group 410, are both 1.

Assuming that the No. 1 charging gun 420 is the latest one to start charging among the eight charging guns 420, and the No. 9 power module group 410 has been occupied by No. 3 charging gun 420, the No. 9 power module group 410 will be occupied by the No. 1 charging gun 420 and switched from the No. 3 charging gun 420 to the No. 1 charging gun 420 based on the charging gun priority and the charging path priority.

**Table 2**

| Power allocation path number | Gun number | Module group number | Charging gun priority | Charging path priority | Quantity of contactors in this path | 1# contactor |
|---|---|---|---|---|---|---|
| 1 | 1 | 3 | 1 | 2 | 1 | K13 |
| 2 | 1 | 5 | 1 | 2 | 1 | K15 |
| 3 | 1 | 7 | 1 | 2 | 1 | K17 |
| 4 | 1 | 9 | 2 | 3 | 1 | K19 |
| 5 | 1 | 11 | 1 | 1 | 1 | K1B |
| 6 | 2 | 4 | 1 | 2 | 1 | K24 |
| 7 | 2 | 6 | 1 | 2 | 1 | K26 |
| 8 | 2 | 8 | 1 | 2 | 1 | K28 |
| 9 | 2 | 10 | 1 | 1 | 1 | K2A |
| 10 | 2 | 12 | 1 | 1 | 1 | K2C |
| 11 | 3 | 1 | 1 | 2 | 1 | K13 |
| 12 | 3 | 5 | 1 | 2 | 1 | K35 |
| 13 | 3 | 7 | 1 | 2 | 1 | K37 |
| 14 | 3 | 9 | 1 | 1 | 1 | K39 |
| 15 | 3 | 11 | 1 | 1 | 1 | K3B |
| ...... | .... | .... | ...... | ...... | ...... | ....... |
| 31 | 7 | 1 | 5 | 2 | 1 | K17 |
| 32 | 7 | 3 | 5 | 2 | 1 | K37 |
| 33 | 7 | 5 | 5 | 2 | 1 | K57 |
| 34 | 7 | 9 | 5 | 1 | 1 | K79 |
| 35 | 7 | 11 | 5 | 1 | 1 | K7B |
| 36 | 7 | 2 | 5 | 2 | 1 | K28 |
| 37 | 7 | 4 | 5 | 2 | 1 | K48 |
| 38 | 7 | 6 | 5 | 2 | 1 | K68 |
| 39 | 7 | 10 | 5 | 1 | 1 | K8A |
| 40 | 7 | 12 | 5 | 3 | 1 | K8C |

A specific embodiment of the charging system 400 charging the high-power electricity device is given below.

In this embodiment, each charging gun 420 corresponds to one power module group 410 directly connected to the charging gun 420.

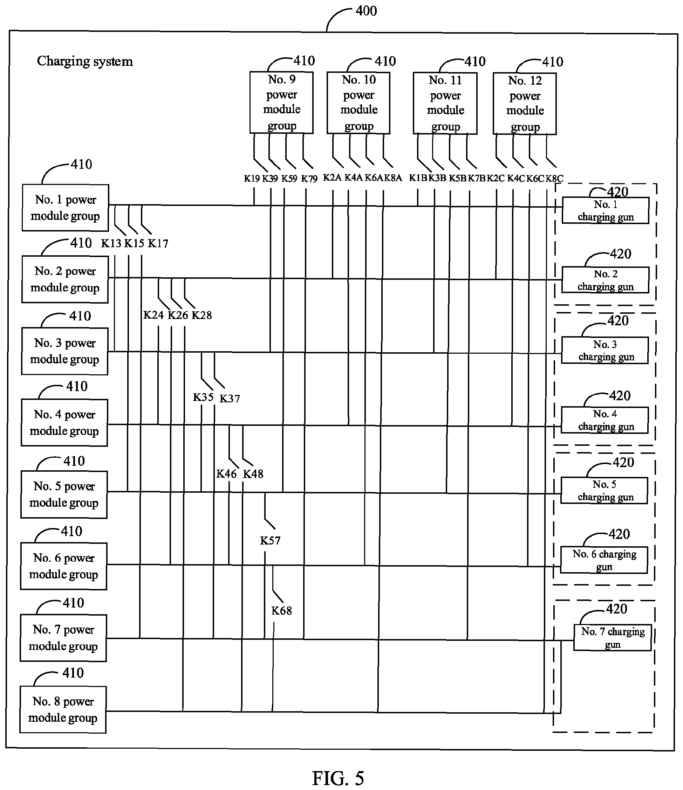

FIG. 5 shows the power allocation topology of the 480 KW charging system 400 connected to three common electricity-consumption devices and one high-power electricity-consumption device.

In this embodiment, when the charging system 400 needs to be connected to the high-power electricity-consumption device, the power allocation topology of the charging system 400 remains unchanged, and output buses of two charging guns are connected in parallel to acquire a high-power liquid-cooled charging gun 420, which can achieve a power output required by the high-power electricity-consumption device. As shown in FIG. 5, the No. 7 charging gun 420 is the high-power liquid-cooled charging gun 420.

The routing table corresponding to the charging system 400 is shown in Table 2. The No. 7 liquid-cooled charging gun 420 has ten power scheduling paths, realizing invoke permissions for all twelve power module groups 410, thereby achieving a single gun output of 480 KW.

In this embodiment, the charging gun priorities of the No. 7 liquid-cooled charging gun 420 are all 5, which is higher than the charging gun priorities of other charging guns 420. Even if two common charging guns 420 perform charging at 240 KW and occupy all the power module groups 410, as long as the No. 7 liquid-cooled charging gun 420 starts charging, the No. 7 liquid-cooled charging can quickly occupy the power module group 410. Therefore, the liquid-cooled charging gun 420 can output high power, and fast charging of the high-power electricity-consumption device can be achieved.

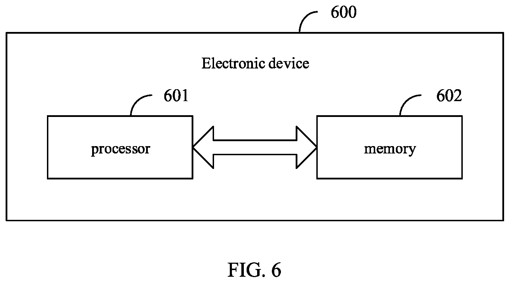

In some embodiments, as shown in FIG. 6, the embodiments of the present disclosure further provide an electronic device 600, which includes a processor 601, a memory 602, and a computer program stored in the memory 602 and executable by the processor 601. The processor 601, when executing the computer program, implements each process in the embodiments of the power allocation method for the charging system 400 described above, and the same technical effect can be achieved, which is not repeated herein.

It should be noted that the electronic device in the embodiments of the present disclosure includes a mobile electronic device and a non-mobile electronic device described above.

The embodiments of the present disclosure further provide a non-transitory computer-readable storage medium on which a computer program is stored. The computer program, when executed by a processor, implements each process in the embodiments of the power allocation method for the charging system 400 described above, and the same technical effect can be achieved, which is not repeated herein.

The processor is a processor in the electronic device described in the above embodiments. The readable storage medium includes a computer-readable storage medium, such as a computer read-only memory (ROM), a random access memory (RAM), a magnetic disk, or an optical disk.

The embodiments of the present disclosure further provide a computer program product including a computer program. The computer program, when executed by a processor, implements the power allocation method for the charging system 400 described above.

The processor is a processor in the electronic device described in the above embodiments. The readable storage medium includes the computer-readable storage medium, such as a computer read-only memory (ROM), a random access memory (RAM), a magnetic disk, or an optical disk.

The embodiments of the present disclosure further provide a chip. The chip includes a processor and a communication interface. The communication interface is coupled with the processor. The processor is configured to run programs or instructions to implement each process in the embodiments of the power allocation method for the charging system 400 described above, and the same technical effect can be achieved, which is not repeated herein.

It should be understood that the chip mentioned in the embodiments of the present disclosure may also be referred to as a system-level chip, a system chip, a chip system, or a system-on-chip.

It should be noted that in the present disclosure, terms "include", "have", and any variations thereof are intended to cover non-exclusive inclusions, such that a process, method, product, or device that includes a series of elements is not necessarily limited to those clearly listed elements, but may also include other elements that are not clearly listed or are inherent to the process, method, product, or device. Without further limitation, an element defined by the phrase "including a ..." does not preclude the presence of additional identical elements in the process, method, product, or device that includes the element. Further, it should be noted that the scope of method and device in the embodiments of the present disclosure is not limited to performing functions in the order shown or discussed, but may also include performing functions substantially simultaneously or in the reverse order depending on the functions involved. For example, the described methods may be performed in an order different from that described, and various steps may be added, omitted, or combined. Additionally, features described with reference to certain examples may be combined in other examples.

From the above description of the implementations, it will be clear to those skilled in the art that the method of the above embodiments can be implemented with the aid of software and a necessary common hardware platform or can be implemented through hardware. In many cases, the former one is a better implementation. Based on this understanding, all of the technical solutions according to the embodiments of the present disclosure, or the part thereof that contributes to the related art, can be embodied in the form of a computer software product. The computer software product may be stored in a storage medium (such as a Read Only Memory (ROM)/Random Access Memory (RAM), a disk, and an optical disk) and contain instructions to enable a terminal device (which may be a mobile phone, a computer, a server, a network device, etc.) to perform the method described in each of the embodiments of the present disclosure.

The embodiments of the present disclosure have been described above in conjunction with the accompanying drawings, but the present disclosure is not limited to the above specific embodiments, which are merely illustrative rather than limiting. Under the inspiration of the present disclosure, a person skilled in the art may make many forms without departing from the spirit of the present disclosure and the scope of protection of the claims, all of which fall within the scope of protection of the present disclosure.

In the description of this specification, description with reference to the terms "an embodiment", "some embodiments", "exemplary embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been illustrated and described, it should be understood by those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A power allocation method for a charging system (400), wherein the charging system (400) comprises a plurality of charging guns (420) and a plurality of power module groups (410), the plurality of power module groups (410) being configured to supply power to the plurality of charging guns (420), and the method comprises:
acquiring (110) charging demand power of a charging gun (420) among the plurality of charging guns (420);
determining (120), in response to determining that supply power of the charging gun (420) is smaller than the charging demand power, a module group score for each of the plurality of power module groups (410) based on a charging gun priority, a charging path priority, an operation state of the power module group (410), and power information of the power module group (410); and
determining (130) a target module group for the charging gun (420) based on the module group score for each of the plurality of power module groups (410), and controlling the target module group to supply power to the charging gun (420).

2. The power allocation method for the charging system (400) according to claim 1, wherein:
the plurality of power module groups (410) comprises a first power module group and a second power module group;
the first power module group corresponding to the charging gun (420) is directly connected to the charging gun (420); and
the second power module group corresponding to the charging gun (420) is connected to the charging gun (420) through a switching device.

3. The power allocation method for the charging system (400) according to claim 2, wherein said determining the target module group for the charging gun (420) based on the module group score for each of the plurality of power module groups (410) comprises:
determining the target module group for the charging gun (420) based on respective module group scores for the plurality of power module groups (410) when the first power module group corresponding to the charging gun (420) supplies power to the charging gun (420) and the supply power of the charging gun (420) is smaller than the charging demand power,
wherein the target module group is another first power module group corresponding to the charging gun (420) or the second power module group corresponding to the charging gun (420).

4. The power allocation method for the charging system (400) according to claim 2, wherein said determining the target module group for the charging gun (420) based on the module group score for each of the plurality of power module groups (410) comprises:
determining the target module group for the charging gun (420) based on respective module group scores for the plurality of power module groups (410) when all first power module groups corresponding to the charging gun (420) are occupied and the supply power of the charging gun (420) is smaller than the charging demand power,
wherein the target module group is the first power module group corresponding to the charging gun (420) or the second power module group corresponding to the charging gun (420).

5. The power allocation method for the charging system (400) according to any one of claims 1 to 4, further comprising, prior to said acquiring the charging demand power of the charging gun (420):
receiving a charging request of the charging gun (420),
wherein said determining that the supply power of the charging gun (420) is smaller than the charging demand power comprises:
controlling, in response to determining that a power module group (410) among the plurality of power module groups (410) that is directly connected to the charging gun (420) is idle based on the charging request, the power module group (410) directly connected to the charging gun (420) to supply power to the charging gun (420); acquiring the charging demand power of the charging gun (420) during charging; and determining that the supply power of the charging gun (420) is smaller than the charging demand power; or
determining, in response to determining that all power module groups (410) directly connected to the charging gun (420) are occupied based on the charging request, that the supply power of the charging gun (420) is smaller than the charging demand power corresponding to the charging request.

6. The power allocation method for the charging system (400) according to claim 5, further comprising, subsequent to said receiving the charging request of the charging gun (420):
sending, in response to determining that the power module group (410) directly connected to the charging gun (420) is idle based on the charging request, a connection request to the power module group (410) directly connected to the charging gun (420) for establishing a connection; and
determining that the charging request fails and terminating charging in response to receiving a failure signal returned from the power module group (410) directly connected to the charging gun (420).

7. The power allocation method for the charging system (400) according to any one of claims 1 to 4, wherein said determining the module group score for each of the plurality of power module groups (410) based on the charging gun priority, the charging path priority, the operation state of the power module group (410), and the power information of the power module group (410) comprises:
obtaining a weighted sum based on the charging gun priority, the charging path priority, the operation state of the power module group (410), and the power information of the of power module group (410),
wherein a weight of the charging gun priority and a weight of the charging path priority are greater than a weight of the power information of the power module group (410).

8. The power allocation method for the charging system (400) according to any one of claims 1 to 4, wherein the power information of the power module group (410) is equal to an absolute value of a difference between rated power of the power module group (410) and the charging demand power.

9. A power allocation device of a charging system (400), wherein the charging system (400) comprises a plurality of charging guns (420) and a plurality of power module groups (410), the plurality of power module groups (410) being configured to supply power to the plurality of charging guns (420), and the device comprises:
an acquisition module (310) configured to acquire charging demand power of a charging gun (420) among the plurality of charging guns (420);
a first processing module (320) configured to determine, in response to determining that supply power of the charging gun (420) is smaller than the charging demand power, a module group score for each of the plurality of power module groups (410) based on a charging gun priority, a charging path priority, an operation state of the power module group (410), and power information of the power module group (410); and
a second processing module (330) configured to determine a target module group for the charging gun (420) based on the module group score for each of the plurality of power module groups (410), and control the target module group to supply power to the charging gun (420).

10. A charging system (400), comprising:
a plurality of charging guns (420);
a plurality of power module groups (410), each of the plurality of power module groups (410) comprising a plurality of power modules, and the plurality of charging guns (420) being connected to the plurality of power module groups (410); and
the power allocation device according to claim 9, wherein the power allocation device is connected to the plurality of charging guns (420) and the plurality of power module groups (410), and the power allocation device is configured to allocate electric energy of a power module group (410) among the plurality of power module groups (410) to a charging gun (420) among the plurality of charging guns (420).

11. The charging system (400) according to claim 10, wherein the power allocation device comprises a power allocation routing table, the power allocation routing table comprises a correspondence between allocation paths between the plurality of charging guns (420) and the plurality of power module groups (410), charging gun priorities, charging path priorities, and switching device information.

12. An electronic device (600), comprising:
a memory (602);
a processor (601); and
a computer program stored in the memory (602) and executable by the processor (601), wherein the processor (601), when executing the computer program, implements the power allocation method for the charging system (400) according to any one of claims 1 to 8.
